# EUROPEAN PATENT SPECIFICATION

(11) **EP 4 279 774 B1**
(45) Date of publication and mention of the grant of the patent: **28.10.2026**
(21) Application number: 21918949.5
(22) Date of filing: 26.09.2021
(51) Int. Cl.: F16K 11/085, F16K 27/06

(54) **CONTROL VALVE**
STEUERVENTIL
VANNE DE COMMANDE

(30) Priority: 18.01.2021 CN 202110065261
(43) Date of publication of application: 22.11.2023
(73) Proprietor: Hangzhou Ao Ke Mei Rui Technology Co., Ltd., Hangzhou, Zhejiang 310018 (CN)
(72) Inventor: HU, Meiyan, Hangzhou, Zhejiang 310018 (CN)
(74) Representative: Studio Torta S.p.A.
(86) International application number: PCT/CN2021/120574
(87) International publication number: WO 2022/151758

(56) References cited:
- EP-A1- 3 385 583
- WO-A1-2018/061892
- CN-A- 103 742 675
- CN-A- 104 806 779
- CN-A- 107 830 207
- CN-A- 111 828 687
- CN-A- 111 828 687
- CN-A- 111 981 164
- CN-U- 206 175 729
- US-A- 3 658 093
- US-A1- 2019 003 160

## Description

This application claims the priority to Chinese Patent Application No. 202110065261.1, titled "VALVE DEVICE", filed with the China National Intellectual Property Administration on January 18, 2021.

### FIELD

The present application relates to the technical field of fluid control, and in particular to a control valve.

### BACKGROUND

Some systems need to use a multi-passage control valve to control a flow path. For example, a motor vehicle may generally have multiple control valves in order to conduct controlling at present. In a multi-passage control valve, a sealing member is generally provided between a valve body and a valve core assembly for sealing. During the assembly of the sealing member and valve body, it may cause local deformation of the sealing member during the assembly, thus affecting the sealing effect.

EP3385583A1 provides a multi-port valve including a housing which defines an internal cavity. The housing further includes a plurality of ports. Each of the plurality of ports is in communication with the internal cavity. A shell body is rotatably disposed within the internal cavity. A seal member is also provided which has a plurality of openings and surrounds the shell body such that it circumscribes the shell body within the internal cavity.

US2019/003160A1 discloses a diverter valve assembly including a valve housing and a holder secured to the side of the housing for retaining a hand-held showerhead. The housing includes a water inlet port, and first and second water outlet ports. The valve housing includes a single internal valve cavity within which the hollow valve core rotates. The hollow valve core assists in diverting water within the valve cavity to one or both of the water outlet ports.

### SUMMARY

The invention is set out in the appended set of claims. An object according to the present application is to provide a control valve that can limit a position of a sealing member, prevent the sealing member from generating local deformation during assembly, and improve the sealing effect of the sealing member.

A control valve is provided according to an embodiment of the present application, which includes a valve body, a valve core assembly and a sealing member, the valve body has a mounting cavity, at least part of the valve core assembly is located in the mounting cavity, where the valve body includes a bottom wall, a side wall and a position-limiting rib, the side wall protrudes from the bottom wall, the position-limiting rib includes an arc section, the position-limiting rib is located in a space defined by the side wall and the bottom wall and protrudes from the bottom wall, a gap is formed between the side wall and the position-limiting rib, the sealing member includes a first portion and a second portion, the first portion is close to an axial end of the sealing member, the second portion is located between the valve core assembly and the side wall, the first portion is fixedly connected to the second portion, and the first portion is located in the gap.

In the control valve according to the embodiments of the present application, the control valve includes the valve body, the valve core assembly and the sealing member, and the sealing member is located between the valve core assembly and the side wall of the valve body, which can realize the sealing performance of the sealing member. Since the sealing member and the valve body are two separate members, in order to limit an assembly position of the sealing member on the valve body during mounting the sealing member on the valve body, the position-limiting rib is provided in the valve body, the gap is formed between the side wall and the position-limiting rib, and the first portion of the sealing member is arranged in the gap between the side wall and the position-limiting rib during the assembly of the sealing member and the valve body, so that the position-limiting rib can limit the assembly position of the sealing member on the valve body. By providing the position-limiting rib with the arc section in the embodiments of the present application, the arc length of the sealing member can be limited by the position-limiting rib, which can reduce the local deformation of the sealing member during assembly, thereby improving the sealing performance of the control valve and improving the stability and quality of the control valve.

### BRIEF DESCRIPTION OF THE DRAWINGS

FIG. 1 is a partially schematic exploded view of a control valve according to an embodiment of the present application;
FIG. 2 is a partially schematic cross-sectional view of the control valve from a first perspective according to the embodiment of the present application;
FIG. 3 is a partially schematic structural view of a valve body according to the embodiment of the present application;
FIG. 4 is a schematic view showing an assembly of a position-limiting rib and a sealing member according to the embodiment of the present application, and showing arc lengths and center angles of the position-limiting rib and the sealing member respectively;
FIG. 5 is a top view showing a partial structure of the valve body according to another embodiment of the present application;
FIG. 6 is a schematic perspective view showing the partial structure of the valve body in FIG. 5; and
FIG. 7 is a partially schematic cross-sectional view of the control valve from a second perspective according to the embodiment of the present application;

### DETAILED DESCRIPTION OF THE EMBODIMENTS

The features and exemplary embodiments of various aspects of the present application are described in detail below. To make the objects, solutions and advantages of the present application clear and apparent, the present application is described in detail in conjunction with the drawings and the specific embodiments.

In the field of control valves for fluid control, a control valve includes a valve body, a valve core assembly and a sealing member located between the valve body and the valve core assembly, the valve body has a mounting cavity, at least part of the valve core assembly is located in the mounting cavity, the valve core assembly is driven to rotate by a driving device, and the sealing member is configured to seal a gap between the valve core assembly and the valve body, so as to prevent the valve core assembly from leaking during operation.

Generally, the valve body and the sealing member are arranged separately, that is, the sealing member and the valve body are two separate members, then the separate sealing member and the separate valve body are manually assembled together, and then the sealing member is extruded after the valve core assembly 300 is assembled into a mounting space formed by the sealing member, so that a sealing condition among the valve body, the sealing member and the valve core assembly is formed. In order to facilitate the assembly of the sealing member into the mounting cavity of the valve body, a position-limiting member may be provided in the valve body, so as to mount the sealing member between the position-limiting member and the side wall of the valve body. A structure of the position-limiting member is an important factor, which may cause a part of the sealing member not to be limited by the position-limiting member, and may easily cause the deformation of the sealing member, such as the curling of the sealing member, during the assembly of the sealing member and the valve body or during the assembly of the valve core assembly and the sealing member, thereby effecting the sealing performance of the control valve.

A control valve 1000 is provided according to an embodiment of the present application. The control valve 1000 according to the embodiment of the present application is described below with reference to the accompanying drawings.

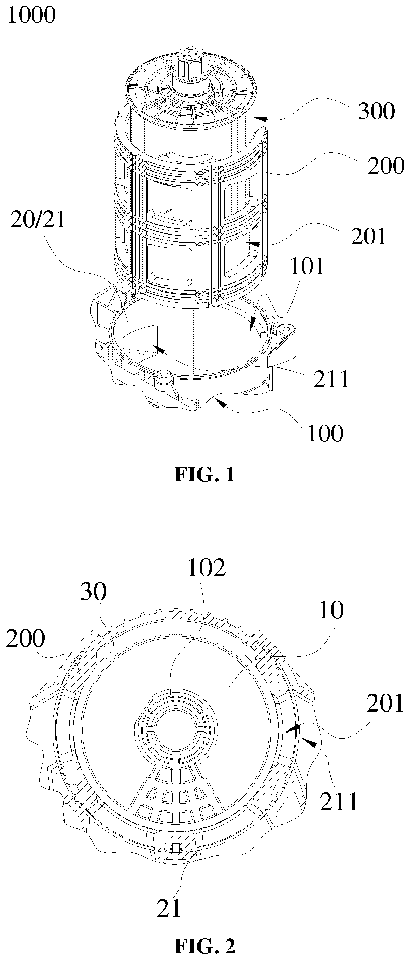

Referring to FIGS. 1 to 4, the control valve 1000 according to the embodiment of the present application includes a valve body 100, a valve core assembly 300 and a sealing member 200. The valve body 100 has a mounting cavity 101, at least part of the valve core assembly 300 is located in the mounting cavity 101, the valve core assembly 300 is rotatable, for example, the valve core assembly is driven to be rotatable by an external driving member, so as to control the fluid. The valve body 100 includes a side wall 20, the sealing member 200 is located in the mounting cavity 101 and is arranged between the side wall 20 of the valve body 100 and the valve core assembly 300, so as to seal a gap between the side wall 20 of the valve body 100 and the valve core assembly 300, thereby improving the quality and stability of the control valve 1000. It can be understood that the side wall 20 is a side wall which defines the mounting cavity 101, and the side wall 20 includes an inner contour and an outer contour, and shapes of the inner contour and the outer contour may be the same or different. For example, in FIG. 1, the inner contour of the side wall 20 is in a cylindrical surface, and the outer contour of the side wall includes a mounting flat surface, so as to facilitate of fitting the control valve 1000.

In order to facilitate the assembly of the sealing member and to better limit a position of the sealing member 200, in some embodiments, the valve body 100 includes a bottom wall 10, a side wall 20 and a position-limiting rib 30, and the side wall 20 protrudes from the bottom wall 10. In this embodiment, the position-limiting rib 30 includes an arc section, the position-limiting rib 30 is located in a space defined by the bottom wall 10 and the side wall 20 and protrudes from the bottom wall 10, a gap is formed between the side wall 20 and the position-limiting rib 30. The sealing member 200 after being assembled has an arc structure and the sealing member 200 is located in the gap. The assembled sealing member 200 has the arc structure, which refers to that an orthographic projection of the assembled sealing member 200 on the bottom wall 10 has an unclosed arc structure, that is, the assembled sealing member 200 has an inner surface and an outer surface, which are arc surfaces respectively. The sealing member 200 includes a first portion and a second portion. It defines that the first portion is close to an axial end of the sealing member 200 and the second portion is located between the valve core assembly 300 and the side wall 20. The first portion is fixedly connected to the second portion, and the first portion is located in the gap between the side wall 20 and the position-limiting rib 30.

In the valve body 100 according to the embodiment of the present application, the position-limiting rib 30 is provided in the valve body 100, the gap is provided between the side wall 20 and the position-limiting rib 30, and the first portion of the sealing member 200 can be arranged in the gap between the side wall 20 and the position-limiting rib 30 during the assembly of the sealing member 200 and the valve body 100, so that the position-limiting rib 30 can limit a position of the sealing member 200 located in the gap. By providing the position-limiting rib 30 with the arc section in the embodiment of the present application, an arc length of the sealing member 200 can be set by the position-limiting rib 300, which can reduce the local deformation of the sealing member 300 during assembly, thereby improving the sealing performance of the control valve and improving the stability and quality of the control valve. The valve body 100 according to the embodiment of the present application can be manufactured or sold separately, and the sealing performance of the control valve 1000 can be improved by providing the valve body 100, which benefits the popularization and utilization.

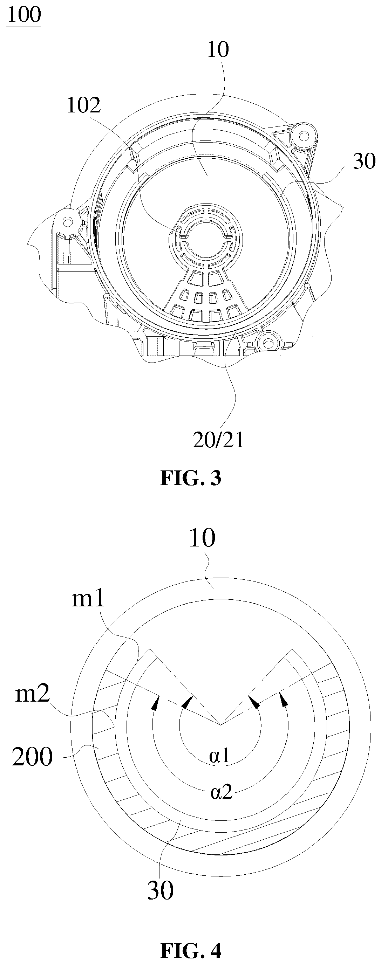

In some embodiments, an arc length of the position-limiting rib 30 is greater than or equal to 0.9 times of an arc length of the first portion of the sealing member 200. It can be understood that, as shown in FIG. 4, the arc length m1 of the position-limiting rib 30 refers to an arc length, facing an arc surface of the sealing member 200, of the position-limiting rib 30, that is, an arc length of an outer surface of the position-limiting rib 30. The arc length m2 of the sealing member 200 refers to an arc length, facing an arc surface of the position-limiting rib 30, of the sealing member 200, that is, an arc length of an inner surface of the assembled sealing member 200. According to the embodiment of the present application, by setting the arc length of the position-limiting rib 30 greater than or equal to 0.9 times of the arc length of the sealing member 200, most of the arc length of the sealing member 200 can be limited by the position-limiting rib 30 when the valve body 100 is applied to the control valve 1000, which is beneficial to reducing the deformation of the portion, not limited by the position-limiting rib 30, of the sealing member if the arc length of the position-limiting rib 30 is relative small during the assembly of the sealing member 200 or during the assembly of the sealing member 200 and the valve core assembly 300, thereby improving the sealing performance of the control valve 1000, and improving the stability and quality of the control valve 1000.

Referring to FIG. 2 and FIG. 3, since the sealing member 200 needs to ensure the static sealing between the sealing member 200 and the side wall 20 of the valve body 100 and the sealing member 200 further needs to ensure the dynamic sealing between the valve core assembly 300 and the sealing member 200 during the rotation of the valve core assembly 300, in some embodiments, the assembled sealing member 200 has an unclosed arc structure, and the unclosed arc structure can expand after it is subjected to a radial external force, so that the valve core assembly 300 and the sealing member 200 have a relatively large expansion space during the extrusion. Compared with the closed annular sealing member 200, the sealing member 200 according to the embodiment of the present application can reduce the design difficulty and the processing difficulty. In case that the sealing member 200 has the unclosed arc structure, two circumferential sides of the sealing member 200 are easily deformed during the assembly, so that edges of the two circumferential sides of the sealing member 200 can be prevented from deforming by setting the arc length of the position-limiting rib 30.

In order to better limit the position of the sealing member 200 and avoid the deformation of the sealing member 200 during the assembly of the control valve 1000, in some embodiments, a center angle corresponding to an arc length of the position-limiting rib 30 is equal to 0.7 - 1 time of a center angle corresponding to an arc length of the inner surface of the side wall 20. Since the inner surface of the side wall 20 is a closed cylindrical curved surface, the center angle corresponding to the arc length of the arc side wall 20 is 360 degrees. By arranging the center angle corresponding to the arc length of the position-limiting rib 30 equal to 0.7 - 1 time of the center angle corresponding to the arc length of the inner surface of the side wall 20, it is calculated that the center angle corresponding to the arc length of the position-limiting rib 30 ranges from 252 degrees to 360 degrees, and the arc length of the position-limiting rib 30 can be calculated by the formula m=n×π×r/180. In the formula, m represents the arc length of the position-limiting rib 30, n represents the degrees of the center angle corresponding to the arc length of the position-limiting rib 30, r represents the radius corresponding to the arc length of the position-limiting rib 30, and in that case, more larger portion of the sealing member 200 can be limited by the position-limiting rib 30.

Referring to FIG. 4, in some embodiment, a center angle α2 corresponding to an arc length of the first portion of the sealing member 200 is greater than or equal to 270 degrees and is less than or equal to 280 degrees. Optionally, the center angle corresponding to the arc length of the first portion of the sealing member 200 may be 276 degrees. A center angle α1 corresponding to the arc length of the position-limiting rib 30 is greater than or equal to 260 degrees and is less than or equal to 360 degrees. In practice, in case that the center angle corresponding to the arc length of the position-limiting rib 30 is 260 degrees, and the center angle corresponding to the arc length of the sealing member 200 is 276 degrees, the arc length of the position-limiting rib 30 is equal to 0.9 times of the arc length of the sealing member 200 ; in case that the center angle corresponding to the arc length of the position-limiting rib 30 is 360 degrees and the center angle corresponding to the arc length of the sealing member 200 is 276 degrees, the arc length of the position-limiting rib 30 is equal to 4.2 times of the arc length of the sealing member 200. With the above arrangement, the sealing member 200 can have a relatively large expansion space, the position-limiting rib 30 can limit most portion of the sealing member 200, and the deformation of the sealing member 200 during assembly can be effectively reduced by setting the arc length of the position-limiting rib 30. It can be understood that the center angle corresponding to the arc length of the sealing member 200 can be set according to the needs of the user. For example, the center angle corresponding to the arc length of the sealing member 200 may be 260 degrees or in other degrees, and the center angle corresponding to the arc length of the position-limiting rib 30 is accordingly adjusted according to the arc length of the sealing member 200.

In order to facilitate the arrangement and manufacturing of the sealing member 200, in some embodiments, the center angle corresponding to the arc length of the position-limiting rib 30 is equal to the center angle corresponding to the arc length of the first portion of the sealing member 200. With the above arrangement, the position-limiting rib 30 can completely limit the sealing member 200 and prevent the deformation thereof. It can be understood that the position-limiting rib 30 and the sealing member 200 are sleeved with each other and the position-limiting rib 30 is arranged corresponding to the sealing member 200, so that the position-limiting rib 30 can achieve a better position-limiting effect.

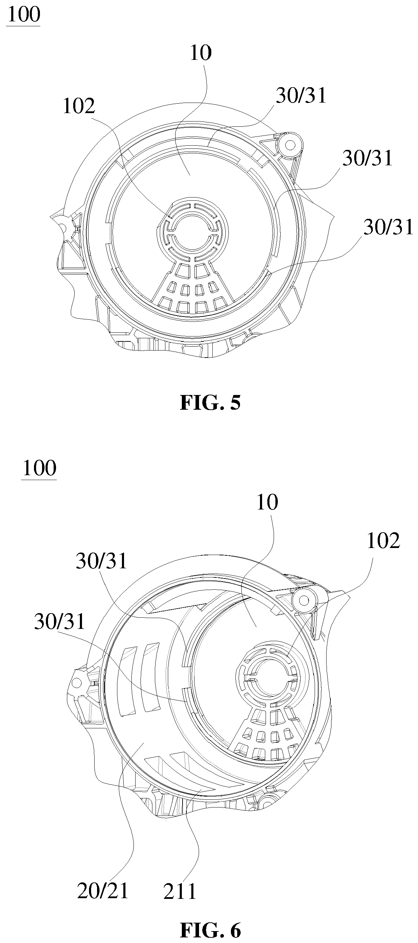

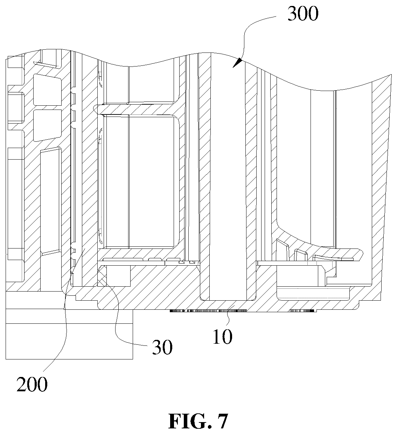

Referring to FIGS. 5 to 7, in order to improve the position-limiting performance of the position-limiting rib 30 to the sealing member 200 and effectively avoid the deformation of the sealing member 200, in some embodiments, the position-limiting rib 30 includes at least two position-limiting blocks 31, each of which has an arc structure, and the at least two position-limiting blocks 31 are spaced apart along a circumferential direction of the mounting cavity 101. The arc length of the position-limiting rib 30 is greater than a sum of arc lengths of the at least two position-limiting blocks 31. Since the at least two position-limiting blocks 31 are spaced apart, a spaced passage is formed between two adjacent position-limiting blocks 31, and the arc length of the position-limiting rib 30 is equal to the sum of the arc lengths of the at least two position-limiting blocks 31 and an arc length corresponding to the spaced passage between the two position-limiting blocks 31, that is, the arc length of the position-limiting rib 30 is a maximum arc length passing through a center of the position-limiting rib 30 and end points of the two position-limiting blocks 31 arranged at the edge in the circumferential direction. The sealing member 200 can be limited at each circumferential position of the sealing member 200 by providing at least two position-limiting blocks 31 that are spaced apart. For example, three position-limiting blocks 31 are provided, two of the position-limiting blocks 31 are respectively arranged at edges on two sides of the sealing member 200, and the other one of the position-limiting blocks 31 is located in the middle of the sealing member 200 in the circumferential direction, so as to prevent the sealing member 200 from deforming, thereby improving the sealing performance of the control valve 1000. It can be understood that the number of the at least two position-limiting blocks 31 are set according to the needs of the user. For example, the number of the position-limiting blocks 31 may be two, four or five, etc.

When the position-limiting rib 30 includes at least two position-limiting blocks 31, in some embodiments, the center angle corresponding to the arc length of each position-limiting block 31 is greater than or equal to 76 degrees, and a projection of each position-limiting block 31 at least partially overlaps with a projection of the first portion of the sealing member 200 in a radial direction of the side wall 20, so that each position-limiting block 31 can limit the position of the sealing member 200. Since the valve body 100 is a plastic member, which is formed generally by injection molding, the difficulty of the manufacturing can be simplified by arranging the center angle corresponding to the arc length of each position-limiting block 31, so as to facilitate the manufacture and molding of the arc position-limiting blocks 31. In practice, the interval between the position-limiting blocks 31 can be set according to the needs of the user, as long as each position-limiting block 31 can limit the first portion of the sealing member 200.

In some embodiments, a width of the gap between the position-limiting rib 30 and the side wall 20 is greater than or equal to a thickness of the first portion of the sealing member 200, and the sealing member 200 is clamped between the valve core assembly 300 and the side wall 20. The above arrangement can facilitate the assembly of the sealing member 200 and the valve body 100.

Since the valve core assembly 300 needs to be sleeved on a side of the inner surface of the side wall 20, in order to enable the valve core assembly 300 to be coaxial with the side wall 20 and thus enable the valve core assembly 300 rotate stably, in some embodiments, the position-limiting rib 30 is coaxial with the side wall 20, the position-limiting rib 30 has a position-limiting surface which faces the side wall 20, and a shape of the position-limiting surface is matched with a shape of the sealing member 200, so that the sealing member 200 is coaxial with the side wall 20. In case that the position-limiting rib 30 includes at least two position-limiting blocks 31, arc surfaces, away from the surface of the side wall 20, of the at least two position-limiting blocks 41 are coplanar with each other, so as to better limit the position of the sealing member 200.

In order to facilitate the assembly of the valve core assembly 300 and the valve body 100, according to the invention, the valve body 100 includes a mounting portion 102, which is located in the mounting cavity 101 and protrudes from the bottom wall 10, part of the valve core assembly 300 is inserted into the mounting portion 102, and a height of the position-limiting rib 30 protruding from the bottom wall 10 is less than or equal to a height of the mounting portion 102 protruding from the bottom wall 10. The above arrangement enables the position-limiting rib 30 to limit the position of the sealing member 30 and prevent the excessive height of the position-limiting rib 30 from affecting the assembly of the valve core assembly 300. In practice, the height of the position-limiting rib 30 can be set according to the needs of the user. In order to avoid affecting the position-limiting performance if the height of the position-limiting rib 30 is small, optionally, the height of the position-limiting rib 30 may be configured to be slightly less than the height of the mounting portion 102, as long as the assembly and rotation of the valve core assembly 300 are not affected.

The control valve 1000 according to the embodiments of the present application is configured to control the fluid. The control valve 1000 is used in a heat exchange system, such as a vehicle air conditioning system or a household air conditioning system. Specifically, a working medium flowing through the control valve 1000 may be water, a mixture of water and other liquids, or other coolants with thermal conductivity. The control valve 1000 controls the distribution of the working medium and adjusts the outlet flow rate flowing through the control valve 1000 so as to control the working medium of the flow path of the heat exchange system, which can improve the control performance of the flow path of the heat exchange system.

In order to realize the control performance of the control valve 1000 on the fluid, in some embodiments, the side wall 20 includes a first sub-portion 21 which extends along a circumferential direction of the side wall 20. The first sub-portion 21 includes a first communication port 211, which extends through the first sub-portion 21. The sealing member 200 includes a second communication port 201, which extends through the sealing member 200. The second communication port 201 corresponds to and is in communication with the first communication port 211, and the position-limiting rib 30 is arranged close to the first sub-portion 21 along the circumferential direction of the side wall 20. With the above arrangement, the position-limiting rib 30 can better limit the sealing member 200 sleeved on the side of the inner surface of the first sub-portion 21 so as to prevent the sealing member 200 from deforming.

To sum up, in the control valve 1000 according to the embodiments of the present application, the control valve 1000 includes the valve body 100, the valve core assembly 300 and the sealing member 200, and the sealing member 200 is sleeved between the valve core assembly 300 and the side wall 20 of the valve body 100, so that the sealing member 200 can realize the sealing between the valve core assembly 300 and the valve body 100 and prevent the control valve 1000 from causing fluid leakage during operation. Since the sealing member 200 and the valve body 100 are two separate members, the position-limiting rib 30 is provided in the valve body 100 to limit the assembly position of the sealing member 200, so as to facilitate the assembly of the sealing member 200 and the valve body 100. The position-limiting rib 30 can limit more arc length of the sealing member 200 by setting the arc length of the position-limiting rib 30 greater than or equal to 0.9 times of the arc length of the sealing member 200 in the embodiment of the present application, and thus, in case that the arc length of the position-limiting rib 30 is same, it is beneficial to reducing the deformation of the portion, which not limited by the position-limiting rib 30, of the sealing member 200 during the assembly of the sealing member 200 or during the assembly of the sealing member 200 and the valve core assembly 300, thereby improving the sealing performance of the control valve 1000, and improving the stability and quality of the control valve 1000, which is convenient for popularization and application.

It should be understood that, relational terms such as "first" and "second" are merely used to distinguish one entity or operation from another entity or operation, but do not indicate or imply an actual relation or order of these entities or operations. It can be understood that the terms so used are interchangeable under appropriate circumstances such that the embodiments of the application described herein, for example, can function or be arranged in sequences other than those described herein or otherwise.

It should be noted that, the above embodiments are only intended to illustrate the present application and not to limit the technical solutions described in the present application. Although the present specification has been described in detail with reference to the embodiments described above, it should be understood by those skilled in the art that, various modifications can be made to the technical solutions of the present application without departing from the scope of the present application, all of which should be contained within the scope of the claims of the present application.

## Claims

1. A control valve (1000), comprising a valve body (100), a valve core assembly (300) and a sealing member (200), wherein the valve body (100) has a mounting cavity (101), at least part of the valve core assembly (300) is located in the mounting cavity (101);
the control valve is **characterized in that**:
the valve body (100) comprises a bottom wall (10), a side wall (20) and a position-limiting rib (30), the side wall (20) protrudes from the bottom wall (10), the position-limiting rib (30) comprises an arc section, the position-limiting rib (30) is located in a space defined by the side wall (20) and the bottom wall (10) and protrudes from the bottom wall (10), a gap is formed between the side wall (20) and the position-limiting rib (30), wherein the sealing member (200) comprises a first portion and a second portion, the first portion is close to an axial end of the sealing member (200), and the second portion is located between the valve core assembly (300) and the side wall (20), wherein the first portion is fixedly connected to the second portion, and the first portion is located in the gap;
wherein the valve body (100) further comprises a mounting portion (102) which is located in the mounting cavity (101) and protrudes from the bottom wall (10), part of the valve core assembly (300) is inserted into the mounting portion (102), and a height of the position-limiting rib (30) protruding from the bottom wall (10) is less than a height of the mounting portion (102) protruding from the bottom wall (10).

2. The control valve (1000) according to claim 1, wherein an arc length of the position-limiting rib (30) is greater than or equal to 0.9 times of an arc length of the first portion of the sealing member (200).

3. The control valve (1000) according to claim 1, wherein a center angle corresponding to an arc length of the position-limiting rib (30) is equal to 0.7 times to 1 time of a center angle corresponding to an arc length of an inner surface of the side wall (20).

4. The control valve (1000) according to claim 1, wherein a center angle corresponding to an arc length of the first portion of the sealing member (200) is greater than or equal to 270 degrees and is less than or equal to 280 degrees, and
a center angle corresponding to an arc length of the position-limiting rib (30) is greater than or equal to 260 degrees and is less than or equal to 360 degrees.

5. The control valve (1000) according to claim 4, wherein the center angle corresponding to the arc length of the position-limiting rib (30) is equal to the center angle corresponding to the arc length of the first portion of the sealing member (200).

6. The control valve (1000) according to claim 1, wherein the position-limiting rib (30) comprises at least two position-limiting blocks (31), and the at least two position-limiting blocks (31) are spaced apart along a circumferential direction of the mounting cavity (101), and
wherein an arc length of the position-limiting rib (30) is greater than a sum of arc lengths of the at least two position-limiting blocks (31).

7. The control valve (1000) according to claim 6, wherein a center angle corresponding to the arc length of each position-limiting block (31) is greater than or equal to 76 degrees, and
a projection of each position-limiting block (31) at least partially overlaps with a projection of the first portion of the sealing member (200) along a radial direction of the side wall (20).

8. The control valve (1000) according to any one of claims 1 to 7, wherein a width of the gap between the position-limiting rib (30) and the side wall (20) is greater than or equal to a thickness of the first portion of the sealing member (200), and
wherein the sealing member (200) is clamped between the valve core assembly (300) and the side wall (20).

9. The control valve (1000) according to claim 8, wherein the position-limiting rib (30) is coaxial with the side wall (20), the position-limiting rib (30) has a position-limiting surface which faces the side wall (20), and a shape of the position-limiting surface is matched with a shape of the sealing member (200), so that the sealing member (200) is coaxial with the side wall (20).

10. The control valve (1000) according to any one of claims 1 to 7, wherein the side wall (20) comprises a first sub-portion (21) which extends along a circumferential direction of the side wall (20), the first sub-portion (21) comprises a first communication port (211), the first communication port (211) extends through the first sub-portion (21), wherein the sealing member (200) comprises a second communication port (201) which extends through the sealing member (200), and the second communication port (201) corresponds to and is in communication with the first communication port (211), and
wherein the position-limiting rib (30) is arranged close to the first sub-portion (21).

## Patentansprüche

1. Steuerventil (1000), umfassend einen Ventilkörper (100), eine Ventilkernbaugruppe (300) und ein Dichtungselement (200), wobei der Ventilkörper (100) einen Montagehohlraum (101) aufweist und sich zumindest ein Teil der Ventilkernbaugruppe (300) in dem Montagehohlraum (101) befindet,
wobei das Steuerventil **dadurch gekennzeichnet ist, dass**:
der Ventilkörper (100) eine Bodenwand (10), eine Seitenwand (20) und eine Positionsbegrenzungsrippe (30) umfasst, die Seitenwand (20) aus der Bodenwand (10) herausragt, die Positionsbegrenzungsrippe (30) einen Bogenbereich umfasst, sich die Positionsbegrenzungsrippe (30) in einem durch die Seitenwand (20) und die Bodenwand (10) definierten Raum befindet und aus der Bodenwand (10) herausragt, zwischen der Seitenwand (20) und der Positionsbegrenzungsrippe (30) ein Spalt gebildet ist, wobei das Dichtungselement (200) einen ersten Abschnitt und einen zweiten Abschnitt umfasst, der erste Abschnitt in der Nähe eines axialen Endes des Dichtungselements (200) ist und sich der zweite Abschnitt zwischen der Ventilkernbaugruppe (300) und der Seitenwand (20) befindet, wobei der erste Abschnitt fest mit dem zweiten Abschnitt verbunden ist und sich der erste Abschnitt in dem Spalt befindet,
wobei der Ventilkörper (100) ferner einen Montageabschnitt (102) umfasst, der sich in dem Montagehohlraum (101) befindet und aus der Bodenwand (10) herausragt, ein Teil der Ventilkernbaugruppe (300) in den Montageabschnitt (102) eingefügt ist und eine Höhe der aus der Bodenwand (10) herausragenden Positionsbegrenzungsrippe (30) geringer ist als eine Höhe des aus der Bodenwand (10) herausragenden Montageabschnitts (102).

2. Steuerventil (1000) nach Anspruch 1, wobei eine Bogenlänge der Positionsbegrenzungsrippe (30) größer oder gleich dem 0,9-Fachen einer Bogenlänge des ersten Abschnitts des Dichtungselements (200) ist.

3. Steuerventil (1000) nach Anspruch 1, wobei ein einer Bogenlänge der Positionsbegrenzungsrippe (30) entsprechender Mittelpunktswinkel gleich dem 0,7-bis 1-Fachen eines einer Bogenlänge einer Innenoberfläche der Seitenwand (20) entsprechenden Mittelpunktswinkels ist.

4. Steuerventil (1000) nach Anspruch 1, wobei ein einer Bogenlänge des ersten Abschnitts des Dichtungselements (200) entsprechender Mittelpunktswinkel größer oder gleich 270 Grad ist und kleiner oder gleich 280 Grad ist und
ein einer Bogenlänge der Positionsbegrenzungsrippe (30) entsprechender Mittelpunktswinkel größer oder gleich 260 Grad und kleiner oder gleich 360 Grad ist.

5. Steuerventil (1000) nach Anspruch 4, wobei der der Bogenlänge der Positionsbegrenzungsrippe (30) entsprechende Mittelpunktswinkel gleich dem der Bogenlänge des ersten Abschnitts des Dichtungselements (200) entsprechenden Mittelpunktswinkel ist.

6. Steuerventil (1000) nach Anspruch 1, wobei die Positionsbegrenzungsrippe (30) mindestens zwei Positionsbegrenzungsblöcke (31) umfasst und die mindestens zwei Positionsbegrenzungsblöcke (31) entlang einer Umfangsrichtung des Montagehohlraums (101) voneinander beabstandet sind, und
wobei eine Bogenlänge der Positionsbegrenzungsrippe (30) größer als eine Summe von Bogenlängen der mindestens zwei Positionsbegrenzungsblöcke (31) ist.

7. Steuerventil (1000) nach Anspruch 6, wobei ein der Bogenlänge jedes Positionsbegrenzungsblocks (31) entsprechender Mittelpunktswinkel größer oder gleich 76 Grad ist und
eine Projektion jedes Positionsbegrenzungsblocks (31) zumindest teilweise eine Projektion des ersten Abschnitts des Dichtungselements (200) entlang einer radialen Richtung der Seitenwand (20) überlappt.

8. Steuerventil (1000) nach einem der Ansprüche 1 bis 7, wobei eine Breite des Spalts zwischen der Positionsbegrenzungsrippe (30) und der Seitenwand (20) größer oder gleich einer Dicke des ersten Abschnitts des Dichtungselements (200) ist, und
wobei das Dichtungselement (200) zwischen der Ventilkernbaugruppe (300) und der Seitenwand (20) geklemmt ist.

9. Steuerventil (1000) nach Anspruch 8, wobei die Positionsbegrenzungsrippe (30) koaxial zu der Seitenwand (20) ist, die Positionsbegrenzungsrippe (30) eine der Seitenwand (20) zugewandte Positionsbegrenzungsoberfläche aufweist und eine Form der Positionsbegrenzungsoberfläche mit der Form des Dichtungselements (200) zusammenpasst, sodass das Dichtungselement (200) koaxial zu der Seitenwand (20) ist.

10. Steuerventil (1000) nach einem der Ansprüche 1 bis 7, wobei die Seitenwand (20) einen ersten Teilabschnitt (21) umfasst, der sich entlang einer Umfangsrichtung der Seitenwand (20) erstreckt, der erste Teilabschnitt (21) eine erste Kommunikationsöffnung (211) umfasst, sich die erste Kommunikationsöffnung (211) durch den ersten Teilabschnitt (21) erstreckt, wobei das Dichtungselement (200) eine zweite Kommunikationsöffnung (201) umfasst, die sich durch das Dichtungselement (200) erstreckt, und die zweite Kommunikationsöffnung (201) der ersten Kommunikationsöffnung (211) entspricht und mit dieser in Kommunikation steht, und
wobei die Positionsbegrenzungsrippe (30) in der Nähe des ersten Teilabschnitts (21) angeordnet ist.

## Revendications

1. Vanne de commande (1000), comprenant un corps de vanne (100), un ensemble noyau de vanne (300) et un élément d'étanchéité (200), dans laquelle le corps de vanne (100) présente une cavité de montage (101), au moins une partie de l'ensemble noyau de vanne (300) est logée dans la cavité de montage (101) ;
la vanne de commande est **caractérisée en ce que**
le corps de vanne (100) comprend une paroi inférieure (10), une paroi latérale (20) et une nervure de limitation de position (30), la paroi latérale (20) fait saillie à partir de la paroi inférieure (10), la nervure de limitation de position (30) comprend une section en arc, la nervure de limitation de position (30) est située dans un espace défini par la paroi latérale (20) et la paroi inférieure (10) et fait saillie à partir de la paroi inférieure (10), un interstice est formé entre la paroi latérale (20) et la nervure de limitation de position (30), dans laquelle l'élément d'étanchéité (200) comprend une première partie et une deuxième partie, la première partie est proche d'une extrémité axiale de l'élément d'étanchéité (200), et la deuxième partie est située entre l'ensemble noyau de vanne (300) et la paroi latérale (20), dans laquelle la première partie est reliée de manière fixe à la deuxième partie, et la première partie est située dans l'interstice ;
dans laquelle le corps de vanne (100) comprend en outre une partie de montage (102) qui est située dans la cavité de montage (101) et fait saillie à partir de la paroi inférieure (10), une partie de l'ensemble noyau de vanne (300) est insérée dans la partie de montage (102), et une hauteur de la nervure de limitation de position (30) faisant saillie à partir de la paroi inférieure (10) est inférieure à une hauteur de la partie de montage (102) faisant saillie à partir de la paroi inférieure (10).

2. Vanne de commande (1000) selon la revendication 1, dans laquelle une longueur d'arc de la nervure de limitation de position (30) est supérieure ou égale à 0,9 fois une longueur d'arc de la première partie de l'élément d'étanchéité (200).

3. Vanne de commande (1000) selon la revendication 1, dans laquelle un angle au centre correspondant à une longueur d'arc de la nervure de limitation de position (30) est compris entre 0,7 fois et 1 fois l'angle au centre correspondant à une longueur d'arc d'une surface intérieure de la paroi latérale (20).

4. Vanne de commande (1000) selon la revendication 1, dans laquelle un angle au centre correspondant à une longueur d'arc de la première partie de l'élément d'étanchéité (200) est supérieur ou égal à 270 degrés et inférieur ou égal à 280 degrés, et
un angle au centre correspondant à une longueur d'arc de la nervure de limitation de position (30) est supérieur ou égal à 260 degrés et inférieur ou égal à 360 degrés.

5. Vanne de commande (1000) selon la revendication 4, dans laquelle l'angle au centre correspondant à la longueur d'arc de la nervure de limitation de position (30) est égal à l'angle au centre correspondant à la longueur d'arc de la première partie de l'élément d'étanchéité (200).

6. Vanne de commande (1000) selon la revendication 1, dans laquelle la nervure de limitation de position (30) comprend au moins deux blocs de limitation de position (31), et les au moins deux blocs de limitation de position (31) sont espacés les uns des autres suivant une direction circonférentielle de la cavité de montage (101), et
dans laquelle une longueur d'arc de la nervure de limitation de position (30) est supérieure à une somme de longueurs d'arc des au moins deux blocs de limitation de position (31).

7. Vanne de régulation (1000) selon la revendication 6, dans laquelle un angle au centre correspondant à la longueur d'arc de chaque bloc de limitation de position (31) est supérieur ou égal à 76 degrés, et
une projection de chaque bloc de limitation de position (31) chevauche au moins partiellement une projection de la première partie de l'élément d'étanchéité (200) suivant une direction radiale de la paroi latérale (20).

8. Vanne de commande (1000) selon l'une quelconque des revendications 1 à 7, dans laquelle une largeur de l'interstice entre la nervure de limitation de position (30) et la paroi latérale (20) est supérieure ou égale à une épaisseur de la première partie de l'élément d'étanchéité (200), et
dans laquelle l'élément d'étanchéité (200) est serré entre l'ensemble de noyau de vanne (300) et la paroi latérale (20).

9. Vanne de commande (1000) selon la revendication 8, dans laquelle la nervure de limitation de position (30) est coaxiale à la paroi latérale (20), la nervure de limitation de position (30) présente une surface de limitation de position qui fait face à la paroi latérale (20), et une forme de la surface de limitation de position est adaptée à une forme de l'élément d'étanchéité (200), de sorte que l'élément d'étanchéité (200) soit coaxial à la paroi latérale (20).

10. Vanne de commande (1000) selon l'une quelconque des revendications 1 à 7, dans laquelle la paroi latérale (20) comprend une première sous-partie (21) qui s'étend suivant une direction circonférentielle de la paroi latérale (20), la première sous-partie (21) comprend un premier orifice de communication (211), le premier orifice de communication (211) s'étend à travers la première sous-partie (21), dans laquelle l'élément d'étanchéité (200) comprend un deuxième orifice de communication (201) qui s'étend à travers l'élément d'étanchéité (200), et le deuxième orifice de communication (201) correspond au premier orifice de communication (211) et est en communication avec le premier orifice de communication (211), et
dans laquelle la nervure de limitation de position (30) est disposée à proximité de la première sous-partie (21).
